# EUROPÄISCHE PATENTSCHRIFT

(11) **EP 2 108 065 B1**
(45) Veröffentlichungstag und Bekanntmachung des Hinweises auf die Patenterteilung: **05.12.2012**
(21) Anmeldenummer: 07702611.0
(22) Anmeldetag: 08.01.2007
(51) Int. Cl.: D01F 4/02, C08J 5/18

(54) **VERFAHREN ZUR HERSTELLUNG VON FORMKÖRPERN AUS PROTEINEN MIT IONISCHEN FLÜSSIGKEITEN**
METHOD FOR THE PRODUCTION OF MOLDED BODIES FROM PROTEINS HAVING IONIC LIQUIDS
PROCÉDÉ DE FABRICATION DE CORPS FAÇONNÉS À PARTIR DE PROTÉINES AVEC DES LIQUIDES IONIQUES

(43) Veröffentlichungstag der Anmeldung: 14.10.2009
(73) Patentinhaber: THÜRINGISCHES INSTITUT FÜR TEXTIL- UND KUNSTSTOFF-FORSCHUNG e.V., 07407 Rudolstadt (DE)
(72) Erfinder: BRÄUER, Silke, 14612 Falkensee (DE); KOSAN, Birgit, 07407 Rudolstadt (DE); MEISTER, Frank, 07407 Rudolstadt (DE); BAUER, Ralf-Uwe, 07407 Rudolstadt (DE)
(74) Vertreter: Wagner, Gerd
(86) Internationale Anmeldenummer: PCT/EP2007/000087
(87) Internationale Veröffentlichungsnummer: WO 2008/083707

(56) Entgegenhaltungen:
- WO-A-2006/000197
- DE-B3-102006 001 773
- PHILLIPS D M ET AL.: "Regenerated silk fiber wet spinning from an ionic liquid solution" JOURNAL OF MATERIALS CHEMISTRY, THE ROYAL SOCIETY OF CHEMISTRY, CAMBRIDGE, GB, Bd. 15, Nr. 39, 2005, Seiten 4206-4208, XP002456272 ISSN: 0959-9428
- PHILLIPS D M ET AL.: "Dissolution and Regeneration of Bombyx mori Silk Fibroin Using Ionic Liquids" JOURNAL OF THE AMERICAN CHEMICAL SOCIETY, AMERICAN CHEMICAL SOCIETY, WASHINGTON, DC, US, Bd. 126, Nr. 44, 2004, Seiten 14350-14351, XP002456273 ISSN: 0002-7863 in der Anmeldung erwähnt

## Beschreibung

Die Erfindung betrifft ein Verfahren zur Herstellung von Formkörpern aus Proteinen durch Lösen der Proteine in ionischen Flüssigkeiten, insbesondere 1,3-Dialkylimidazoliumsalzen, sowie die produktorientierte Verarbeitung dieser Lösungen durch Verformungsverfahren wie Spinn-, Gieß - und Blasverfahren zur Herstellung von Formkörpern wie Fasern, Filamenten, Vliesen, Flach- bzw. Schlauchfolien, Membranen und Filmen. Das erfindungsgemäße Verfahren zur Herstellung von Formkörpern aus Proteinen ist dadurch charakterisiert, dass man das Protein in der ionischen Flüssigkeit löst, die Lösung zu Formkörpern verformt, das Protein durch Fällen in protischen Lösungen regeneriert, das Lösungsmittel durch Waschen abtrennt und die Formkörper trocknet.

Proteine im Rahmen dieser Erfindung sind native, hochmolekulare fibrilläre oder globuläre Proteine, die bedingt durch Ausbildung starker intra- und intermolekularer Wasserstoffbrückenbindungen in ihrer Struktur eine schlechte Löslichkeit in wässrigen und organischen Lösungsmitteln aufweisen. Fibrilläres Protein ist vorzugsweise das vom Sericin befreite Seidenfibroin des Maulbeerseidenspinners Bombyx mori. Globuläre Proteine sind vorzugsweise Speicherproteine wie Maiszein und Weizengluten.

Erfindungsgemäß nach diesem Verfahren hergestellte und verarbeitete Lösungen können die Proteine sowohl allein als auch in Kombination mit anderen, in der ionischen Flüssigkeit gelösten und/oder darin fein genug dispergierten nieder - und/oder hochmolekularen anorganischen und/oder organischen Substanzen enthalten.

### [Stand der Technik]

Ionische Flüssigkeiten sind bei niedrigen Temperaturen (<100°C) schmelzende Salze, die praktisch keinen Dampfdruck haben. Sie sind zwar seit 1914 bekannt, haben aber erst in jüngster Vergangenheit als Lösungsmittel bzw. Reaktionsmedium für viele Synthesen an Bedeutung gewonnen. Von besonderem Interesse sind dabei Verbindungen mit positivem Stickstoffatom wie z.B. das Ammonium-; Pyridinium- und Imidazoliumkation (P. Wasserscheid, W. Keim Angew. Chem. 2000, 112, 3926-3945; J. Dupont et al. Chem. Rev. 2002, 102, 3667; Schilling G. "Ionische Flüssigkeiten" GIT Labor-Fachzeitschrift 2004 (4) 372 -373).

Aus Journal of the American Chemical Society 2004, 126, 14350 ist bekannt, dass bestimmte ionische Flüssigkeiten, basierend auf dem Imidazoliumkation und Chloridanion, in einer inerten Stickstoff-Atmosphäre in Abwesenheit von Wasser und bei erhöhter Temperatur (100°C) Seidenfibroin des Bombyx mori lösen und dieses bei Zusatz von Acetonitril oder Methanol wieder regeneriert werden kann (D.M. Phillips et al. J.Am.Chem.Soc.2004, 126, 14350-14351). Aussagen zur Charakterisierung und Verarbeitung der Fibroinlösung durch Verformungsverfahren wie Spinn-, Gieß- und Blasverfahren werden nicht gemacht.

Zum Verformen von Seidenfibroin, als nicht schmelzbares Polymer, zu Filamenten, Spinnfasern oder Folien/Membranen sind unterschiedliche Lösungsspinnverfahren entwickelt worden. Bekannt ist die Löslichkeit des Seidenfibroins in Schwefel-, Salz- und Phosphorsäuren, in heißer konzentrierter Ameisensäure und in heißen Natrium- und Kaliumhydroxidlösungen (H. Zahn, B. Wulfhorst, M. Steffens "Seide (Maulbeerseide)-Tussahseide" Faserstoff-Tabellen nach Koch, 1994).

In WO0306020 ist das Lösen von Seidenfibroin in Ameisensäure unter Zugabe von Kalziumchlorid, und die Verarbeitung der Lösungen zu Fasern beschrieben (J.P.O'Brien W003060207). WO0208179 beschreibt das Lösen von amorphem Fibroinpulver in einer Mischung aus Dichloressigsäure mit Chloroform und das Verspinnen dieser Lösung zu Fasern (C.J.Stephen W002081793). In den genannten Lösungsmittelsystemen unterliegt das darin gelöste Seidenfibroin molekularen Degradationsprozessen, die eine Verringerung der Molmasse zur Folge haben. Eine Verarbeitung des Proteins aus solchen Lösungen führt zu Produkteigenschaften mit geringem Qualitätsniveau.

Beschrieben ist auch das Lösen von Seidenfibroin in konzentrierten wässrigen Salzlösungen von Lithiumbromid, Kalziumchlorid, Magnesiumchlorid und von Thiocyanaten des Lithiums, Natriums, Magnesiums oder Zinks und von diversen Kupfersalzen (H. Zahn Ullmanns Encyclopedia of Industrial Chemistry, Vol.A24, 95-106, VCH Publishers, Inc., 1993; R.L. Lock, DuPont WO93/15244). Die Verarbeitung von salzhaltigen Lösungen führt allgemein zu einer schlechten Qualität der daraus hergestellten Fäden und Formkörper aufgrund des im Produkt verbleibenden Rückstandes an entsprechendem Salz. Deshalb ist das Entfernen des Salzes vor dem Verformungsprozeß unerläßlich. DuPont hat ein Verfahren entwickelt, bei dem aus konzentrierten Lithiumbromid-haltigen Fibroinlösungen das Salz und das Wasser in zwei zusätzlichen Verfahrensschritten entfernt werden, um danach eine Proteinlösung in 1,1,1,3,3,3-Hexafluor-2-propanol herzustellen, die zu Fasern versponnen werden kann (R.L. Lock WO9315244). Alternativ zu Hexafluor-2-propanol kann Hexafluoraceton-Hydrat zum erneuten Lösen von Seidenfibroin nach der Dialyse einer konzentrierten Lithiumbromid-haltigen Fibroinlösung eingesetzt werden. (A.Tetsuo WO02072931, J. Yao et al. Macromolecules 2002, 35, 6-9). Aufgrund hoher Viskositäten können im Falle von Hexafluoraceton-Hydrat nur Lösungen mit einem Proteingehalt <10 Masse% im Spinnprozeß verarbeitet werden.

Bei beiden Verfahren ist der technologische Aufwand durch die notwendige Dialyse der Salzlösung und anschließende Trocknung zum Entfernen des Wassers deutlich erhöht.

Eine durch Naßspinnverfahren verarbeitbare Lösung des Seidenfibroins lässt sich mit einer Mischung aus Kalziumnitrat-Tetrahydrat und Methanol herstellen, die jedoch ebenfalls vor dem Spinnprozeß einer Dialyse zur Entfernung des Salzes unterzogen werden muss (S.-W. Ha et al. Biomacromolecules 2003, 4, 488-496).

DE19841649 beschreibt das Lösen von fibrillären Proteinen wie dem Seidenfibroin in N-Methylmorpholin-N-oxid-Monohydrat bei Temperaturen von 75-160°C (K.Heinemann, E.Taeger). Für eine Verwendung ionischer Flüssigkeiten als Lösungsmittel für das Verformen der Proteine/Seide zu Filamenten, Spinnfasern und Folien/Membranen spricht eine mögliche höhere thermische Stabilität im Vergleich zu Proteinlösungen in N-Methylmorpholin-N-oxid-Hydrat, die oberhalb 130°C zur explosionsartigen Zersetzung neigen.

Es existiert noch immer die Notwendigkeit, geeignete Lösungsmittelsysteme zu finden, die eine technologisch einfache Herstellung von Fibroinlösungen ohne Reduzierung der Molmasse des Proteins, mit günstigen Eigenschaften hinsichtlich der Realisierbarkeit nachfolgender produktorientierter Verarbeitung dieser Lösungen durch Verformungsverfahren, wie Spinn-, Gieß- und Blasverfahren zur Herstellung von Formkörpern wie Fasern, Filamenten, Vliesen, Flach- bzw. Schlauchfolien, Membranen und Filmen, erlauben.

### [Aufgabe der Erfindung]

Aufgabe der vorliegenden Erfindung ist die Schaffung eines Verfahrens, durch das man bei hoher Verfahrenssicherheit und Umweltfreundlichkeit auf einfache Art und Weise, Proteine unter weitgehendem Erhalt der molekularen Parameter zu Formkörpern wie Filamenten, Spinnfasern und Folien/Membranen verformt.

Diese Aufgabe wird beim erfindungsgemäßen Verfahren dadurch gelöst, dass man
a) das Protein in Wasser vorquellen lässt und anschließend unter Scherung fein dispergiert, abpresst oder abfiltriert, und das feuchte Protein
b) in einer wässrigen Lösung der ionischen Flüssigkeit, unter Zusatz von Stabilisatoren dispergiert, unter Scherung, Temperatur und Vakuum das Wasser entfernt und in eine homogene Lösung überführt,
c) die Lösung einem Spinnpaket zuführt, wo diese die Spinnkapillare (n) bzw. den Schlitz der Spinndüse (n) passiert und die zu Kapillaren oder zur Flach- bzw. Schlauchfolie verformten Lösungsstrahlen unter Verzug durch einen Luftspalt führt, die orientierten Lösungsstrahlen durch Behandeln mit einer temperierten Lösung, die mit der ionischen Flüssigkeit mischbar für das Protein aber ein Fällungsmittel darstellt, ausfällt, am Ende der Fällbadstrecke durch Ab- oder Umlenken vom Fällbad trennt und den Formkörper als Filamentgarn, Faserkabel bzw. Folie/Membran abzieht, einer ein- bzw. mehrstufigen Fällmittelwäsche unterwirft und trocknet oder zu Stapelfasern schneidet und trocknet, bzw.
d) die Lösung mit einer Rakel durch gleichmäßiges Verteilen auf einer glatten Platte aufbringt und durch Behandeln mit einer temperierten Lösung, die mit der ionischen Flüssigkeit mischbar für das Protein aber ein Fällungsmittel darstellt, das Protein regeneriert und den Formkörper als Folie/Membran abzieht, einer ein- bzw. mehrstufigen Fällmittelwäsche unterwirft und trocknet.

Bevorzugt eingesetzte Proteine sind dabei insbesondere das Seidenfibroin des Maulbeerseidenspinners Bombyx mori sowie globuläre Proteine wie Maiszein und Weizengluten. Beim erfindungsgemäßen Verfahren wird fibrilläres Protein, wie Seidenfibroin, unter starker Scherung in Wasser bis zur Einzelfaser aufgeschlagen. Nach dem Abpressen liegt gequollenes Fibroin mit ca. 80-90 Masse% Wasser vor. Zum Pulver vermahlenes, globuläres Protein, wie Maiszein oder Weizengluten, wird in Wasser dispergiert und als gequollenes Material abfiltriert.

Überraschenderweise lässt sich das feuchte Proteinmaterial in wässrigem 1,3-Dialkylimidazoliumsalz leicht in eine homogene Suspension überführen, die unter Scherung, Temperatur und Vakuum nach Abdestillieren des Wassers in eine homogene Spinnlösung übergeht. Der Temperaturbereich liegt dabei vorzugsweise bei 80-95°C. Bei dem erfindungsgemäßen Verfahren muss nicht in inerter Stickstoff-Atmosphäre gearbeitet werden, und es kann im allgemeinen eine deutlich niedrigere Temperatur zum Lösen des Proteins gewählt werden als für das Lösen des trockenen Seidenfibroins in wasserfreier ionischer Flüssigkeit benötigt wird (vergleiche D.M. Phillips et al. J.Am.Chem.Soc.2004, 126, 14350-14351). Das Charakterisieren der Spinnlösungsqualität kann durch Analysieren der Homogenität der Lösung unter dem Polarisationsmikroskop erfolgen. Rheologische Messungen an der Proteinlösung liefern Daten zur Viskosität, die eine Einschätzung der erforderlichen Spinnparameter ermöglichen. Die Bestimmung des Wassergehaltes erfolgt an Hand des Brechungsindexes.

Der Partikelgehalt und die auf die Klassenbreite bezogene Partikelverteilung in der Spinnlösung, die mittels Laserbeugung bestimmt werden können, erlauben eine zusätzliche Charakterisierung der Spinnlösungsqualität (siehe B.Kosan, C.Michels Chemical Fibers Int. 1999, 48,4,S.50-54).

Um den Erhalt der molekularen Parameter des Proteins nach dem Lösen in ionischer Flüssigkeit und Regenerieren im Anschluß an den Verformungsprozeß zu überprüfen, kann eine Charakterisierung durch kapillarviskosimetrische Messungen erfolgen. Dazu werden die Grenzviskositäten, d.h. die Kennziffern für die Größe der Proteinmoleküle im gelösten Zustand bei unendlicher Verdünnung, von verdünnten Lösungen des regenerierten Proteins im Vergleich zum nativen, eingesetzten Protein ermittelt. Im Fall des Seidenfibroins erfolgt eine Messung der Viskositäten in 50%igen wässrigen Lithiumbromidlösungen. Für eine hohe Stabilität der Molmasse des Proteins über lange Zeit bei erhöhter Temperatur hat sich ein Zusatz von Antioxidantien wie Hydrochinon, p-Phenylendiamin, Gallussäureester, Tannine u.ä. bewährt. Wie thermogravimetrische Analysen (TGA) und Messungen mittels Differential-Scanning-Kalometrie (DSC) zeigen, ist eine gute thermische Stabilität der erfindungsgemäßen Spinnlösungen bis mindestens 220°C gegeben. Damit weisen die erfindungsgemäßen Lösungen eine wesentlich bessere thermische Stabilität im Vergleich zu Proteinlösungen in N-Methyl-morpholin-N-oxid-Hydrat (NMO-Hydrat) auf, die oberhalb 130°C zur explosionsartigen Zersetzung neigen (K.Heinemann, E.Taeger DE19841649). Während bei der Herstellung von Proteinlösungen in NMO-Hydrat auf exaktes Destillieren bis zum Erreichen des Monohydrats zu achten ist, ergeben sich durch einfachere Verfahrensweise beim Lösen in ionischen Flüssigkeiten deutlich kürzere Verarbeitungszeiten zur Herstellung der Spinnlösung. Zudem kann im Vergleich zu NMO-Hydrat-Lösungen in den ionischen Flüssigkeiten, insbesondere in 1,3-Dialkylimidazoliumacetaten, bei vergleichbaren Viskositäten, die ein Verarbeiten durch Spinnverfahren erlauben, ein höherer Masse%-Anteil an Protein gelöst werden, was zu einem effektiverem Prozess und stabileren Formkörpern führt. Erfindungsgemäß werden vorzugsweise konzentrierte Lösungen des Proteins von mindestens 10% bis zu 50%, in Abhängigkeit der sich ergebenden Lösungsviskosität, zur Herstellung von Formkörpern eingesetzt.

Ebenso lassen sich Proteine zusammen mit in ionischen Flüssigkeiten löslichen synthetischen und/oder natürlichen Polymeren auflösen und zu Formkörpern verformen.

Das erfindungsgemäße Verformen der Lösung zu Filamenten, Spinnfasern, Flach- bzw. Schlauchfolien und Membranen erfolgt in einem Trocken-Nass-Extrusionsverfahren dergestalt, dass man die Lösung dem Spinnpaket zuführt, in einem temperierbaren Wärmetauscher die erforderliche Spinntemperatur einstellt, durch Spinndüsen zu Filamenten bzw. Folien verformt und unter Verzug durch einen Spalt zum Fällbad führt. Die Fadenbildung kann man als zweistufigen Prozess darstellen. In der Spinnkapillare erfolgt vorwiegend unter dem Einfluss der Scherspannung bei konstanter Temperatur eine Verjüngung des Lösungsstrahles vom Eintritts- auf den Austrittsquerschnitt der Spinnkapillare.

Im Spalt definierter Länge erfolgt unter dem Einfluss der axialen Dehnspannung bei abnehmender Temperatur eine weitere Verjüngung des Lösungsstrahles - der Spinnverzug- im Verhältnis von Abzugs- und Spritzgeschwindigkeit. Der Verzug des Lösungsstrahles im Spalt ist gleichzeitig mit einer Zunahme der Fadenoberfläche verbunden.

Erfindungsgemäß leitet man die orientierten Lösungsstrahlen zum Regenerieren des Proteins durch ein Fällbad, das ein protisches Lösungsmittel enthält, in dem die ionische Flüssigkeit aber nicht das Protein löslich ist, vorzugsweise Methanol.

Folien und Membranen können mit einer erfindungsgemäß hergestellten Lösung des Proteins in ionischer Flüssigkeit auch derart hergestellt werden, dass eine definierte Menge dieser viskosen Lösung mittels einer Rakel auf einer glatten, gesäuberten, temperierten Fläche ausgestrichen wird und das Protein anschließend in einem Fällbad mit protischem Lösungsmittel, vorzugsweise Methanol, und ausreichender Verweildauer regeneriert wird. In einer weiteren Variante zur Verformung der erfindungsgemäß hergestellten Lösung des Proteins kann durch eine Ringspaltdüse mit protischem Innen- und Außenbad zu Schlauchfolien blasverformt werden.

Die Membraneigenschaften der erfindungsgemäß hergestellten Folien und Membranen sind eine Funktion der Verarbeitungsparameter. Durch Variation der Proteinkonzentration in der Lösung, Spaltgröße und/oder Abzugsgeschwindigkeit kann die Schichtdicke der Folien und Membranen beeinflusst werden.

Die ionischen Flüssigkeiten erlauben das Arbeiten im geschlossenen Lösungsmittelkreislauf. Die im Fällbad ausgewaschene ionische Flüssigkeit kann nach destillativem Aufkonzentrieren als Lösungsmittel in den Kreislauf zurückgeführt werden.

Das erfindungsgemäße Verfahren wird nun an Hand von Beispielen erläutert.

### [Beispiele]

### Beispiel 1

Das auf 3-5mm Länge geschnittene Seidenfibroin des Bombyx mori wird in Wasser dispergiert, im Flottenverhältnis 1:20 aufgeschlagen und 12h quellen gelassen. Durch leichtes Abpressen wird auf 10 Masse % an Fibroin entwässert. Durch Dispergieren von 210g pressfeuchtem Seidenfibroin in 61.25g 80%iger wässriger Lösung von 1-Ethyl-3-methyl-imidazoliumacetat (EMIMAc), dem man zuvor 0.5 Masse % Propylgallat/Natriumhydroxid als Stabilisator zugesetzt hat, erhält man 271.25g Maische, die nach Eintrag in einen Kneter unter starker Scherung, einer Temperatur von 80-90°C und abnehmendem Druck von 850 bis 5mbar unter vollständiger Wasserentfernung in 70g einer homogenen Lösung überführt wird. Die Lösezeit beträgt 160 min. Der Brechungsindex der 30 masseprozentigen Fibroinlösung beträgt bei 50°C 1.5107. Die Homogenität der Lösung wird an Hand entnommener Proben unter dem Polarisationsmikroskop kontrolliert. Rheologische Messungen ergaben bei einer Temperatur von 50°C eine abfallende Viskosität von 1140Pas bis 640Pas im Bereich eines Schergefälles von 0.3-4.2 l/s.

Nach Regenerierung des Seidenfibroins mit Methanol ergeben kapillarviskosimetrische Messungen von verdünnten Lösungen des Proteins in 50%igem wässrigem Lithiumbromid eine Grenzviskosität von 20.22ml/g. Die Grenzviskosität des Ausgangs-Seidenfibroins wurde analog bestimmt und beträgt 22.57ml/g.

### Beispiel 2

Analog Beispiel 1 werden 17.5g.Seidenfibroin unter Lösen in 65.6g 80%iger wässriger Lösung von 1-Butyl-3-methyl-imidazoliumacetat (BMIMAc) bei pH 7 in 70g homogene viskose Lösung mit 25 Masse % Fibroin überführt. Die Lösezeit beträgt 180 min. Der Brechungsindex der Fibroinlösung beträgt bei 50°C 1.5015. Die Homogenität der Lösung wird an Hand entnommener Proben unter dem Polarisationsmikroskop kontrolliert. Rheologische Messungen ergaben bei einer Temperatur von 50°C eine abfallende Viskosität von 1070Pas bis 698Pas im Bereich eines Schergefälles von 0.3-4.2 l/s.

Nach Regenerierung des Seidenfibroins mit Methanol ergeben kapillarviskosimetrische Messungen von verdünnten Lösungen des Proteins in 50%igem wässrigem Lithiumbromid eine Grenzviskosität von 22.42ml/g. Die Grenzviskosität des Ausgangs-Seidenfibroins wurde analog bestimmt und beträgt 22.57ml/g.

### Beispiel 3

Analog Beispiel 1 werden 14g Seidenfibroin unter Lösen in 70g 80%iger wässriger Lösung von 1-Ethyl-3-methyl-imidazoliumchlorid (EMIMCl) in 70g homogene viskose Lösung mit 20 Masse % Fibroin überführt. Die Lösezeit beträgt 140 min. Der Brechungsindex der Fibroinlösung beträgt bei 50°C 1.5377. Die Homogenität der Lösung wird an Hand entnommener Proben unter dem Polarisationsmikroskop kontrolliert. Rheologische Messungen ergaben bei einer Temperatur von 50°C eine linear abfallende Viskosität von 977Pas bis 574Pas im Bereich eines Schergefälles von 0.3-4.2 l/s.

Nach Regenerierung des Seidenfibroins mit Methanol ergeben kapillarviskosimetrische Messungen von verdünnten Lösungen des Proteins in 50%igem wässrigem Lithiumbromid eine Grenzviskosität von 22.39ml/g. Die Grenzviskosität des Ausgangs-Seidenfibroins wurde analog bestimmt und beträgt 22.57ml/g.

### Beispiel 4

7.0g fein gemahlenes Maiszein wird in Wasser dispergiert und abfiltriert. Zu 78.75g einer 80%igen wässrigen Lösung von 1-Butyl-3-methyl-imidazoliumchlorid (BMIMCl), der man zuvor 0.5 Masse % Propylgallat/Natriumhydroxid als Stabilisator zugesetzt hat, wird unter Rühren portionsweise das feuchte Protein zugegeben, so dass eine homogene Suspension entsteht. Diese wird nach Eintrag in einen Kneter unter starker Scherung, einer Temperatur von 80-90°C und abnehmendem Druck von 850 bis 6mbar unter vollständiger Wasserentfernung in 70g einer homogenen Lösung überführt. Die Lösezeit beträgt 120 min. Der Brechungsindex der 10 masseprozentigen Zeinlösung beträgt bei 50°C 1.5229. Die Homogenität der Lösung wird an Hand entnommener Proben unter dem Polarisationsmikroskop kontrolliert. Rheologische Messungen ergaben bei einer Temperatur von 50°C eine linear abfallende Viskosität von 40Pas bis 26Pas im Bereich eines Schergefälles von 0.4-4.2 l/s.

### Beispiel 5

8.38g des auf 3-5mm Länge geschnittenen Seidenfibroins des Bombyx mori werden in Wasser dispergiert, im Flottenverhältnis 1:20 aufgeschlagen und 12h gequollen. 930mg eines zerkleinerten Eukalyptus-Zellstoffs (Cuoxam DP 569)werden ebenfalls in Wasser dispergiert. Es wird zudem soviel Natriumhydroxid zur Cellulose-Suspension zugesetzt, bis sich ein pH-Wert von 10 einstellt.

Es wird leicht abgepresst und die pressfeuchten Materialien mit 75.9g 80%iger wässriger Lösung von 1-Butyl-3-methyl-imidazoliumchlorid (BMIMCl) vermischt, dem man zuvor 0.5 Masse % Propylgallat/Natriumhydroxid als Stabilisator zugesetzt hat. Diese Maische wird nach Eintrag in einen Kneter unter starker Scherung, einer Temperatur von 85-95°C und abnehmendem Druck von 850 bis 6mbar unter vollständiger Wasserentfernung in 70g einer homogenen Lösung überführt wird. Die Lösezeit beträgt 150 min. Der Brechungsindex der 13.3 masseprozentigen Lösung, bestehend aus 90 Teilen Seidenfibroin und 10 Teilen Cellulose, beträgt bei 50°C 1.5252. Die Homogenität der Lösung wird an Hand entnommener Proben unter dem Polarisationsmikroskop kontrolliert. Rheologische Messungen ergaben bei einer Temperatur von 50°C eine abfallende Viskosität von 1331Pas bis 513Pas im Bereich einer Scherrate von 0.3-4.2 l/s.

### Beispiel 6

Eine analog Beispiel 2 hergestellte Spinnlösung mit 20 Masse% Seidenfibroin in 1-Butyl-3-methylimidazoliumacetat (BMIMAc), die bei 50°C eine Viskosität von 147-129Pas bei einem Schergefälle von 0.6-4.3 l/s aufweist, wird in einer Kolbenspinnapparatur zu Monofilamenten verarbeitet. Dabei wird die in einem innen geläppten Stahlzylinder auf 35°C temperierte, luftblasenfreie Fibroinlösung mit einem motorgetriebenen Kolben durch Spinndüsen mit Durchmessern von 100µm oder 75µm (l/d-Verhälnis 3-6) über einen Luftspalt von 15mm in ein Fällbad, bestehend aus Methanol, gedrückt. Das gebildete Monofilament wird über eine Umlenkgalette durch das 1m lange Fällbad zur Wickelgalette geführt, wo der Faden mit einer definierten Abzugsgeschwindigkeit (z.B. 2m/min) aufgewickelt wird. Zur vollständigen Entfernung der ionischen Flüssigkeit werden die Monofilamente noch 3 Stunden im Methanol₋Waschbad belassen und anschließend bei Raumtemperatur getrocknet.

### Beispiel 7

Die in Beispiel 5 hergestellte 13.3 masseprozentige Spinnlösung in 1-Butyl-3-methylimidazoliumchlorid (BMIMCl) wird in einer Kolbenspinnapparatur analog Beispiel 6 zu Monofilamenten verarbeitet. Die Spinntemperatur beträgt hierbei 65°C. Es wird eine Abzugsgeschwindigkeit von bis zu 10m/min an der Wickelgalette erreicht. Als Fällbad wird vorzugsweise auf 20°C temperiertes Methanol verwendet.

### Beispiel 8

5g der in Beispiel 4 hergestellten Lösung von 10 Masse % Maiszein in 1-Butyl-3-methylimidazoliumchlorid (BMIMCl) wird zur Herstellung einer Membran mittels Rakel gleichmäßig auf eine auf 80°C vortemperierte Glasplatte verteilt. Die Platte wird in eine Fällbadwanne gegeben und gut mit Methanol bedeckt, um das Protein zu regenerieren. Nach einer Verweildauer von 2 Stunden wird die Platte entnommen, bei Raumtemperatur getrocknet und die Membran abgezogen.

### Beispiel 9

Die in Beispiel 5 hergestellte 13.3 masseprozentige Spinnlösung in 1-Butyl-3-methylimidazoliumchlorid (BMIMCl) wird in einer Druckpumpenspinnapparatur zu Schlauchfolien verarbeitet. Dabei wird die in einem Vorratsgefäß auf 65°C temperierte, luftblasenfreie Spinnlösung durch eine Ringschlitzdüse mit einem Spaltdurchmesser von 20mm und einer Spaltbreite von 9.5mm über einen Luftspalt von 10cm in ein 3m langes Fällbad aus Methanol gedrückt. Im Luftspalt wird die Schlauchfolie durch Druckluft querverstreckt. In das Schlauchinnere wird ein stetig erneuertes Innenfällbad, bestehend aus Methanol, eingebracht. Unter Verzug werden die Schlauchfolien im feuchten Zustand aufgewickelt. Zwischen zwei Quetschwalzen wird die Schlauchfolie dann mit temperierter Luft getrocknet.

## Patentansprüche

1. Verfahren zur Herstellung von Formkörpern aus Proteinen, durch Lösen derselben in einer ionischen Flüssigkeit, Verformen der viskosen Lösung zum Formkörper und Regenerieren des Proteins, **dadurch gekennzeichnet, dass** man
a) das Protein in Wasser unter Scherung fein dispergiert, abpresst oder abfiltriert, und das feuchte Protein,
b) in einer wässrigen Lösung der ionischen Flüssigkeit, unter Zusatz von Stabilisatoren dispergiert, unter Scherung, Temperatur und Vakuum das Wasser entfernt und in eine homogene Lösung überführt,
c) die Lösung einem Spinnpaket zuführt, wo diese die Spinnkapillare (n) bzw. den Schlitz der Spinndüse (n) passiert und die zu Kapillaren oder zur Flach- bzw. Schlauchfolie verformten Lösungsstrahlen unter Verzug durch einen Luftspalt führt, die orientierten Lösungsstrahlen durch Behandeln mit einer temperierten Lösung, die mit der ionischen Flüssigkeit mischbar für das Protein aber ein Fällungsmittel darstellt, ausfällt, am Ende der Fällbadstrecke durch Ab- oder Umlenken vom Fällbad trennt und den Formkörper als Filamentgarn, Faserkabel bzw. Folie/Membran abzieht, einer ein- bzw. mehrstufigen Fällmittelwäsche unterwirft und trocknet oder zu Stapelfasern schneidet und trocknet, bzw.
d) die Lösung mit einem Rakel durch gleichmäßiges Verteilen auf einer glatten Platte aufbringt und durch Behandeln mit einer temperierten Lösung, die mit der ionischen Flüssigkeit mischbar für das Protein aber ein Fällungsmittel darstellt, das Protein regeneriert und den Formkörper als Folie/Membran abzieht, einer ein- bzw. mehrstufigen Fällmittelwäsche unterwirft und trocknet.

2. Verfahren nach Anspruch 1, **dadurch gekennzeichnet, dass** man native, hochmolekulare fibrilläre oder globuläre Proteine, die starke inter- und intramolekulare Wasserstoffbrückenbindungen ausbilden, oder Mischungen dieser Proteine mit anderen, in der ionischen Flüssigkeit löslichen und/oder darin fein genug dispergierten nieder- und/oder hochmolekularen organischen und/oder anorganischen Substanzen einsetzt.

3. Verfahren nach Anspruch 1, **dadurch gekennzeichnet, dass** man als Proteine das Seidenfibroin des Seidenspinners Bombyx mori, Maiszein oder Weizengluten einsetzt.

4. Verfahren nach Anspruch 1, **dadurch gekennzeichnet, dass** als ionische Flüssigkeit 1,3-Dialkylimidazoliumacetate oder 1,3-Dialkylimidazoliumchloride eingesetzt werden.

5. Verfahren nach Anspruch 1, **dadurch gekennzeichnet, dass** die angewandte Lösetemperatur im Bereich zwischen 80-130°C liegt.

6. Verfahren nach Anspruch 5, **dadurch gekennzeichnet, dass** die angewandte Lösetemperatur im Bereich zwischen 80-90°C liegt.

7. Verfahren nach Anspruch 1, **dadurch gekennzeichnet, dass** die Spinnlösung Stabilisatoren in Form von organischen Verbindungen mit mindestens einer konjugierten Doppelbindung und zwei Hydroxyl-, bzw. Aminogruppen enthält.

8. Verfahren nach Anspruch 7, **dadurch gekennzeichnet, dass** die als Stabilisatoren eingesetzten organischen Verbindungen mit mindestens einer konjugierten Doppelbindung und zwei Hydroxyl-, bzw. Aminogruppen Hydrochinon, Phenylendiamin, Gallussäureester oder Tannine sind.

9. Verfahren nach Anspruch 1, **dadurch gekennzeichnet, dass** man die ionische Flüssigkeit aus dem Fällbad recycelt.

## Claims

1. Method for producing molded bodies from proteins by dissolving the same in an ionic liquid, forming the viscous solution to yield molded bodies and regenerating the protein, **characterized in that**
a) the protein is preswollen in water and finely dispersed under shearing action, squeezed out or filtered off, and the moist protein
b) is dispersed in an aqueous solution of the ionic liquid under addition of stabilizers, the water is being removed under shearing, heat supply and vacuum, and is transferred into a homogeneous solution,
c) the solution is fed into a spinning pack where the former passes the spinning capillary/spinning capillaries and the slot of the spinneret, respectively, and the solution jets formed into capillaries or into flat or tubular films, respectively, are directed under draft through an air gap, **in that** the oriented solution jets are precipitated by treatment with a tempered solution which is mixable with the ionic liquid, however, is a precipitant to the protein, the precipitated molded bodies are being separated by deflection or redirection at the end of the precipitation line from the coagulation bath, and the molded body is drawn-off as a filament yarn, a fiber cable and a film/membrane, respectively, subjected to a one and multi-step, respectively, washing for removing the precipitant, dried or cut into staple fibers and dried, respectively or
d) applies to and evenly distributes the solution upon a smooth plate by a doctor blade and by treatment with a tempered solution which is mixable with the ionic liquid, however, is a precipitant to the protein, regenerates the protein and draws-off the molded body as a film/membrane, subjects it to a one, respectively, multi-step washing for removing the precipitant and dries it.

2. Method as claimed in claim 1, **characterized in that** native, high-molecular fibrous or globular proteins are employed which form strong intra-molecular and inter-molecular hydrogen bridge linkages or mixtures of such proteins with other low and/or high-molecular organic or inorganic substances soluble and/or finely enough dispersible in the ionic liquids.

3. Method as claimed in claim 1, **characterized in that** silk fibroin of the silk moth Bombyx mori, maize zein or wheat gluten are employed as proteins.

4. Method as claimed in claim 1, **characterized in that** 1,3-dialkyl-imidazolium-acetate or 1,3-dialkyl-imidazolium-chloride are used as ionic liquid.

5. Method as claimed in claim 1, **characterized in that** used dissolution temperature lies in a range of from 80 - 130°C.

6. Method as claimed in claim 5, **characterized in that** the used dissolution temperature lies in a range of from 80 - 90°C.

7. Method as claimed in claim 1, **characterized in that** the spinning solution includes stabilizers in the form of organic compounds having at least one conjugate double bond and two hydroxyl groups and amino-groups, respectively.

8. Method as claimed in claim 7, **characterized in that** the stabilizers used in the form of organic compounds having at least one conjugate double bond and two hydroxyl groups and amino-groups, respectively, such as hydroquinone, phenylene diamine, gallic acid esters or tannin.

9. Method as claimed in claim 1, **characterized in that** the ionic liquid is recycled from the coagulating bath.

## Revendications

1. Procédé de fabrication de corps moulés à partir de protéines, en dissolvant celles-ci dans un liquide ionique, en formant la solution visqueuse de manière à obtenir le corps moulé et en régénérant la protéine, **caractérisé par le fait que**
a) la protéine est finement dispersée dans l'eau sous l'action de cisaillement, est pressée ou filtrée, et que la protéine humide
b) est dispersée dans une solution aqueuse du liquide ionique en ajoutant des stabilisateurs, l'eau étant éliminée sous cisaillement, température et vide, et est transférée en une solution homogène,
c) la solution est amenée à un paquet de filage où celle-ci passe à travers le(s) tube(s) capillaire(s) de filage (n) et la fente de la filière (n) respectivement, et les jets de solution formés en tubes capillaires ou en feuille plate ou bien tubulaire sont menés sous étirage à travers une fente d'air, que les jets de solution orientés sont précipités par un traitement avec une solution tempérée qui est miscible avec le liquide ionique mais qui constitue un précipitant pour la protéine, sont séparés du bain de précipitation par déviation ou renvoi au bout du trajet de bain de précipitation, et que le corps moulé est sorti sous forme de fil continu, de câble de fibre et de feuille/membrane respectivement, est soumis à un lavage à une ou bien plusieurs étapes pour enlever le précipitant, et séché ou est coupé en fibres discontinues et séché, ou bien que
d) la solution est appliquée au moyen d'une racle sur une plaque lisse, en la répartissant régulièrement, et la protéine est régénérée par un traitement avec une solution tempérée qui est miscible avec le liquide ionique mais qui constitue un précipitant pour la protéine, et que le corps moulé est sorti sous forme de feuille/membrane, est soumis à un lavage à une ou bien plusieurs étapes pour enlever le précipitant et est séché.

2. Procédé selon la revendication 1, **caractérisé par le fait que** l'on met en oeuvre des protéines fibrillaires ou globulaires natives de haut poids moléculaire qui forment de fortes liaisons hydrogène intermoléculaires et intramoléculaires, ou des mélanges de ces protéines avec d'autres substances organiques et/ou inorganiques de faible et/ou de fort poids moléculaire qui sont solubles dans le liquide ionique et/ou dispersées dans celui-ci d'une manière suffisamment fine.

3. Procédé selon la revendication 1, **caractérisé par le fait que** l'on utilise la fibroïne de la soie du ver à soie de bombyx mori, la zéine de maïs ou les glutens de blé en tant que protéines.

4. Procédé selon la revendication 1, **caractérisé par le fait que** l'on utilise des acétates de 1,3-dialkyl-imidazolium ou des chlorures de 1,3-dialkyl-imidazolium en tant que liquide ionique.

5. Procédé selon la revendication 1, **caractérisé par le fait que** la température de dissolution utilisée est comprise entre 80 et 130 °C.

6. Procédé selon la revendication 5, **caractérisé par le fait que** la température de dissolution utilisée est comprise entre 80 et 90 °C.

7. Procédé selon la revendication 1, **caractérisé par le fait que** la solution à filer comprend des stabilisateurs sous forme de composés organiques comprenant au moins une double liaison conjuguée et deux groupes hydroxyles ou bien groupes amino.

8. Procédé selon la revendication 7, **caractérisé par le fait que** les composés organiques comprenant au moins une double liaison conjuguée et deux groupes hydroxyles ou bien groupes amino, qui sont utilisés en tant que stabilisateurs, sont l'hydroquinone, la phénylènediamine, l'ester de l'acide gallique ou le tannin.

9. Procédé selon la revendication 1, **caractérisé par le fait que** le liquide ionique est recyclé du bain de précipitation.
